(19) Europäisches Patentamt
European Patent Office
Office européen des brevets

(11) Veröffentlichungsnummer: **0 005 773**
**B1**

(12) # EUROPÄISCHE PATENTSCHRIFT

(45) Veröffentlichungstag der Patentschrift: **14.03.84**

(51) Int. Cl.³: **C 08 K 5/54**, C 08 L 23/00, C 08 J 3/24

(21) Anmeldenummer: **79101522.5**

(22) Anmeldetag: **18.05.79**

(54) **Verfahren zur Vernetzung und Stabilisierung von radikalisch vernetzbaren Polymeren.**

(30) Priorität: **31.05.78 DE 2823820**

(43) Veröffentlichungstag der Anmeldung: **12.12.79 Patentblatt 79/25**

(45) Bekanntmachung des Hinweises auf die Patenterteilung: **14.03.84 Patentblatt 84/11**

(84) Benannte Vertragsstaaten: **AT BE DE FR GB IT NL SE**

(56) Entgegenhaltungen:
**DE - A - 2 745 546**
**US - A - 3 054 818**
**US - A - 3 491 137**
**US - A - 4 032 510**

**Die Akte enthält technische Angaben, die nach dem Eingang der Anmeldung eingereicht wurden und die nicht in dieser Patentschrift enthalten sind.**

(73) Patentinhaber: **SIEMENS AKTIENGESELLSCHAFT, Berlin und München Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **Rogler, Wolfgang, Dr., Geschwister-Scholl-Strasse 4, D-8520 Erlangen (DE)**
Erfinder: **Von Gentzkow, Wolfgang, Dr., Geschwister-Scholl-Strasse 1, D-8520 Erlangen (DE)**
Erfinder: **Rubner, Roland, Dr., Buchenring 15, D-8551 Röttenbach (DE)**

**EP 0 005 773 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Verfahren zur Vernetzung und Stabilisierung von radikalisch vernetzbaren Polymeren

Die Erfindung betrifft ein Verfahren zur Vernetzung von radikalisch vernetzbaren Polymeren und zur Stabilisierung gegen oxidativen und/oder thermischen Abbau, wobei die Vernetzung in Gegenwart phenolischer Oxidationsinhibitoren mit teilweise durch Silyl- bzw. Silylengruppen substituierten inhibierungsaktiven Hydroxylgruppen durchgeführt wird.

Radikalisch vernetzbare Polymere, insbesondere Polyolefine, Mischungen auf der Basis von Polyolefinen oder mit Polyolefinen als wesentlichem Bestandteil, sowie Copolymerisate von Äthylen mit α-Olefinen und Äthylenabkömmlingen, wie beispielsweise Vinylacetat, Acrylester und Styrol, finden wegen ihrer guten elektrischen und mechanischen Eigenschaften in vielen Bereichen der Technik immer breitere Anwendung. Von zunehmender Bedeutung ist die Verwendung vernetzter Polyolefine als Isoliermaterial für Kabel und Leitungen, da diese wegen der verbesserten thermomechanischen Eigenschaften der vernetzten Polyolefine bis zu einer maximalen Leitertemperatur von 90° im Dauerbetrieb und von 130° C im Überlastungsfall eingesetzt werden können.

Voraussetzung für die hinreichende Gebrauchstüchtigkeit der radikalisch vernetzten Polymeren über einen möglichst langen Zeitraum ist eine entsprechend gute chemische Beständigkeit unter Einsatzbedingungen. Diese Voraussetzung ist allgemein bei den oben angeführten Polymeren, insbesondere wenn sie vernetzt sind, nicht gegeben. Die Polymeren unterliegen nämlich bei erhöhten Temperaturen einem beschleunigten oxidativen und auch thermischen Abbau. Dadurch werden ihre Gebrauchseigenschaften verschlechtert und die Gebrauchsdauer wird wesentlich verkürzt. Um die benötigten Eigenschaftswerte über einen wesentlich längeren Zeitraum aufrechtzuerhalten, müssen solche Materialien gegen thermooxidativen Abbau stabilisiert werden. Dies geschieht im allgemeinen durch Oxidationsinhibitoren. Oxidationsinhibitoren sind phenolische bzw. aminische organische Verbindungen, die als Radikalfänger wirken und somit die bei der Oxidation organischer Materialien ablaufenden radikalischen Abbaumechanismen unterbrechen oder verhindern können.

In »Ullmanns Encyklopädie der Technischen Chemie«, 4. Auflage, Band 8, Seiten 19 bis 42, sind die Wirkungsweise und die wichtigsten chemischen Strukturmerkmale von Oxidationsinhibitoren anhand von Beispielen bekannter und kommerziell erhältlicher Produkte beschrieben. Weiteres Material über Oxidationsinhibitoren findet sich in: W. L. Hawkins, »Polymer Stabilization«, Wiley-Interscience, John Wiley & Sons, Inc., New York, London, 1972, und G. K. Cowell, »Additives for Plastics — Antioxidants«, Plastics Engineering, Seiten 51 bis 57, 1976.

Aufgrund des bekannten umfangreichen Materials über Oxidationsinhibitoren und anhand der Vielzahl bekannter Produkte lassen sich Oxidationsinhibitoren durch folgende Merkmale kennzeichnen:

1. Sie enthalten wenigstens eine phenolische, möglichst sterisch gehinderte Hydroxyl- und/oder wenigstens eine sekundäre aromatische Aminogruppe mit radikalisch leicht abspaltbarem Wasserstoff oder sie sind heterocyclische Verbindungen mit NH-Gruppierungen. Dadurch können sie mit den bei der oxidativen Alterung gebildeten Radikalen unter Übertragung von wenigstens einem Wasserstoffatom reagieren.
2. Aufgrund ihrer chemischen Struktur sind sie befähigt, nach der Abspaltung von Wasserstoff energiearme Radikale auszubilden bzw. durch Folgereaktionen in stabile, nichtradikalische Verbindungen überzugehen.

Der Grad der Wirksamkeit der Oxidationsinhibitoren kann durch strukturelle Merkmale ihres aromatischen oder heterocyclischen Grundgerüstes oder durch Substituenten beeinflußt werden. Außerdem hängt er wesentlich von der Löslichkeit und dem daraus resultierenden Grad der homogenen Verteilung des Oxidationsinhibitors im Polymermaterial ab.

Generell werden Oxidationsinhibitoren — schon aus Kostengründen — nur in kleinen Konzentrationen (etwa $10^{-2}$ bis 5 Masse-%) eingesetzt. Die Löslichkeit der sehr polaren Oxidationsinhibitoren in radikalisch vernetzbaren, nachfolgend näher erläuterten Polymeren, vor allem in teilkristallinen Polyolefinen, wie Polyäthylen und Polypropylen, ist jedoch so gering, daß sich die für eine optimale Wirksamkeit erforderliche Konzentration und molekulardisperse Verteilung nicht erreichen lassen. Als Folge ihrer geringen Löslichkeit wandern Oxidationsinhibitoren zur Polymeroberfläche, von welcher sie sich — ihrem Dampfdruck entsprechend — mehr oder weniger leicht verflüchtigen, so daß das Polymere — insbesondere bei erhöhten Temperaturen — sehr rasch an diesen Stabilisatoren verarmt. Auf diese Weise kann selbst bei Verwendung chemisch hochwirksamer Oxidationsinhibitoren eine schnelle oxidative Alterung durch vorzeitigen Verlust der Oxidationsinhibitoren eintreten.

Um die damit verbundene Stabilitätseinbuße zu vermeiden, werden immer mehr Versuche unternommen, die Löslichkeit der Oxidationsinhibitoren zu verbessern. Dies geschieht beispielsweise durch Substitution mit langkettigen Alkylresten, durch Zugabe von hochsiedenden flüssigen siliciumorganischen Verbindungen als Lösungsvermittler oder durch Substitution durch Silylreste (R. V. Albarino und H. Schonhorn, »J. Appl. Polym. Sci.«, Vol. 17 [1973], Seite 3323, Vol. 18 [1974], Seite

635, und Vol. 19 [1975], Seite 2667). Die Substitution durch Silylreste erfolgt dabei z. B. durch Umsetzung von Oxidationsinhibitoren über zusätzliche, nicht an der oxidationsinhibierenden Wirkung beteiligte Hydroxylgruppen mit geeigneten siliciumorganischen Verbindungen. Dabei wird der Wasserstoff dieser OH-Gruppen durch Silylgruppen substituiert. Im Sinne der Oxidationsinhibierung funktionelle OH-Gruppen nehmen an diesen Reaktionen nicht teil. Ihre Umsetzung wird sogar ausdrücklich vermieden, da man davon ausgeht, daß die Wirksamkeit der Oxidationsinhibitoren dadurch verlorengeht.

Der Vorgang der Vernetzung von radikalisch vernetzbaren Polymeren ist mit dem Vorgang der Stabilisierung der vernetzten Polymeren eng verknüpft, denn es ist technisch vorteilhaft und üblich, Stabilisatoren — also auch Oxidationsinhibitoren — den Polymeren vor der Verarbeitung zum geformten Produkt und der danach durchzuführenden Vernetzung zuzusetzen. Die Vernetzung wird also in Gegenwart der Oxidationsinhibitoren durchgeführt. Dabei reagieren die Oxidationsinhibitoren in der oben beschriebenen, für sie typischen Weise mit den vernetzungsaktiven Radikalen unter Wasserstoffübertragung und Vernetzungsinhibierung, d. h., es wird sowohl die Vernetzungsausbeute reduziert als auch ein großer Teil der Oxidationsinhibitoren inaktiviert.

Darüber hinaus wird eine wirksame Langzeitstabilisierung der vernetzten Polymeren durch den Umstand erschwert, daß diese grundsätzlich oxidationsempfindlicher sind als unvernetzte. Und zwar enthalten sie von der Vernetzungsreaktion her noch langlebige Radikale, die als Startradikale für die thermooxidative Alterung fungieren, und eine erhöhte Konzentration an leicht oxidablen Gruppierungen. Hinzu kommt noch, daß der Einsatz der vernetzten Polymeren bei erhöhter Temperatur eine starke Beschleunigung der Abbaureaktionen zur Folge hat, so daß die Oxidationsinhibitoren, obwohl sie durch die Vernetzungsreaktion in ihrer Wirksamkeit gemindert werden, höheren Anforderungen gerecht werden müssen.

Um die vernetzten Polymeren, insbesondere Polyolefine, ausreichend stabilisieren zu können, bedarf es deshalb vergleichsweise hoher Oxidationsinhibitorkonzentrationen. Hohe Oxidationsinhibitorkonzentrationen bedingen jedoch eine starke Beeinträchtigung der Vernetzung, so daß auch die Konzentration an Vernetzungsinitiator, d. h. die Peroxidkonzentration, oder — bei Vernetzung durch Strahlung — die Strahlendosis erhöht werden muß. Dabei ist es von entscheidender Bedeutung, die Konzentrationen dieser sich während der Vernetzungsreaktion gegenseitig in ihrer Wirkung beeinträchtigender Komponenten genau aufeinander und auf weitere Mischungsbestandteile abzustimmen. Dadurch wird aber die Mischungsherstellung kompliziert und verteuert.

Trotz des aufwendigen Mischungsaufbaus und des zusätzlichen Einsatzes von Vernetzungsbeschleunigern gelingt es beispielsweise bei der technischen Durchführung der strahlungsinitiierten Vernetzung von Kabel- und Leitungsisolierungen auf Polyolefinbasis nicht immer, mit den für eine wirtschaftliche Fertigung notwendigen hohen Fertigungsgeschwindigkeiten eine für den technischen Einsatz ausreichende Vernetzung zu erzielen, ohne entweder das Polymermaterial zu schädigen bzw. in seiner Funktion als Isoliermaterial zu beeinträchtigen oder das Verfahren weniger wirtschaftlich durchzuführen. Da die zur Vernetzung notwendigen Strahlendosen in kurzen Zeiten aufgebracht werden müssen, bei der Bestrahlung jedoch Wärme und Wasserstoff freigesetzt werden, kann ab bestimmten Isolierwandstärken die Wärme nicht mehr schnell genug abgeführt werden, so daß Blasenbildung auftritt. Um eine problemlose Fertigung zu gewährleisten, muß deshalb ein Weg gefunden werden, mit niedrigeren Strahlendosen auszukommen. Das wiederum setzt das Auffinden eines Verfahrens voraus, das es ermöglicht, die Wechselwirkung zwischen Oxidationsinhibitoren und reaktiven Radikalen während der Vernetzungsreaktion zu vermindern und darüber hinaus die Vernetzung zu beschleunigen bzw. die Vernetzungsausbeute zu erhöhen.

Aus US-A-4 032 510 sind Verbindungen zur Stabilisierung polymerer Kohlenwasserstoffe gegen thermischoxidativen und photochemischen Abbau in Form von Bisphenolen, deren phenolische OH-Gruppen verkappt sind, folgender Struktur bekannt:

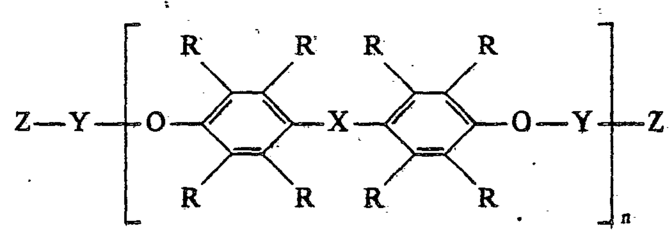

Da das Bindeglied X allein acht verschiedene Bedeutungen haben kann (wie $-S-$, $-CR_2-$, $-SO-$, $-SO_2-$, $-NR-$ und $-CO-$) und die Gruppe Y sogar elf, worunter sich auch phosphor-, bor- und siliciumhaltige Gruppierungen befinden, ergibt sich bereits aufgrund von X und Y eine große Zahl von Kombinationsmöglichkeiten, d. h. eine Vielzahl von Verbindungen. Wesentlich dabei ist aber, daß diese Stabilisatoren keinen an Silicium gebundenen olefinisch ungesättigten Rest aufweisen. Die experimentell beschriebenen der bekannten Stabilisatoren weisen ferner für X und Y ausschließlich Kohlenstoffgruppierungen auf; Y ist nämlich meist eine Carbonylfunktion ($-CO-$) und X eine Alkylengruppierung ($-CR_2-$). Dabei ist auch bemerkenswert, daß die Wirksamkeit dieser

Stabilisatoren ausschließlich in Gegenwart des bekannten Synergisten Distearylthiodipropionat untersucht wurde, wobei außerdem die Konzentration des Synergisten das 2,5- bis 3fache der Stabilisatorkonzentration betrug.

DE-A-2 745 546 beschreibt den Einsatz von mit Silylgruppen ($SiR_3$) verkappten phenolischen und aminischen Oxidationsinhibitoren bei Massen aus ungesättigten Ölen oder Harzen, im wesentlichen selbsttrocknende Anstrichmittel, d. h. bei ungesättigten Systemen, die relativ langsam (über Stunden oder Tage) vernetzen. Ein Einfluß der Silylgruppen, bei denen die Reste R unter anderem Vinylgruppen sein können, auf den Vernetzungsablauf ist nicht ersichtlich. Die beschriebenen Oxidationsinhibitoren sind sämtlich monomerer Natur.

Aufgabe der Erfindung ist es, ein Verfahren der eingangs genannten Art derart auszugestalten, daß eine rasche und wirtschaftliche Vernetzung radikalisch vernetzbarer Polymerer in Gegenwart von Oxidationsinhibitoren ohne inhibitorbedingte Beeinträchtigung des Vernetzungsprozesses, möglichst unter Erhöhung der Vernetzungsausbeute, erzielt wird.

Dies wird erfindungsgemäß dadurch erreicht, daß oligomere Verbindungen folgender Struktur als Oxidationsinhibitoren verwendet werden:

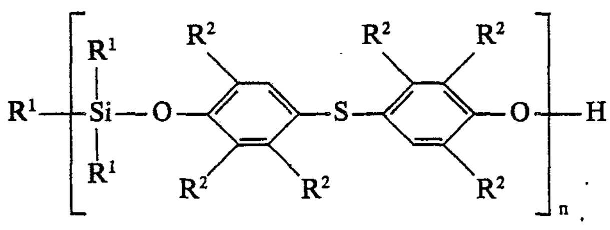

wobei n eine Zahl bis 20 ist,

mindestens ein Rest $R^1$ an jedem Si-Atom Alkenyl mit 2 bis 3 C-Atomen bedeutet und die weiteren Reste $R^1$ gleich oder verschieden sind und folgende Bedeutung haben:

Alkyl mit 1 bis 3 C-Atomen, Phenyl, Cycloalkyl, Alkyloxy mit 1 bis 3 C-Atomen, Methoxyäthoxy, Äthoxyäthoxy, Aryloxy, Aralkyloxy mit 7 bis 11 C-Atomen und Cycloalkyloxy,

und die Reste $R^2$ gleich oder verschieden sind und Wasserstoff oder n- und iso-Alkyl mit 1 bis 5 C-Atomen bedeuten oder die beiden ortho-ständigen Substituenten $R^2$ zusammen Benzo sein können.

Bevorzugt werden dabei Verbindungen eingesetzt, bei denen die nicht olefinisch ungesättigten Reste $R^1$ am Silicium Alkyl mit 1 bis 3 C-Atomen, Phenyl, Alkyloxy mit 1 bis 3 C-Atomen, Methoxyäthoxy und Äthoxyäthoxy sind.

Beim erfindungsgemäßen Verfahren sind die inhibierungsaktiven Funktionen der Oxidationsinhibitoren durch Schutzgruppen substituiert, d. h., die Oxidationsinhibitoren sind sozusagen verkappt. Dabei ist die Tatsache völlig überraschend, daß die in verkappter Form zum Einsatz gelangenden Oxidationsinhibitoren den radikalisch vernetzten Polymeren die gleiche Alterungsstabilität wie unverkappte Oxidationsinhibitoren verleihen oder sogar eine erhöhte Alterungsstabilität. Dies ist deshalb überraschend, da in der Literatur auch die Auffassung vertreten wird, daß Oxidationsinhibitoren ihre Wirksamkeit verlieren würden, wenn ihre aktiven NH- bzw. OH-Gruppierungen durch Umsetzung mit Organosilanen desaktiviert würden (vgl. R. V. Albarino und H. Schonhorn, »J. Appl. Polym. Sci.«, Vol. 17 [1973], Seite 3325).

Zur Erklärung der unerwartet guten Wirksamkeit der erfindungsgemäß in verkappter Form zur Stabilisierung von radikalisch vernetzten Polymeren eingesetzten Oxidationsinhibitoren wird vermutet, daß ihre inhibierungsaktiven Funktionen infolge der Verkappung den Vernetzungsprozeß weitgehend unbeschadet überstehen und danach durch Hydrolyse der Si—O-Bindungen mittels geringer Mengen, beispielsweise eindiffundierenden Wassers nach und nach wieder zurückgebildet werden und ihre Wirksamkeit zurückerlangen. Dabei dürfte die hydrolytische Rückbildung mit ausreichender Geschwindigkeit erfolgen, so daß nach der Vernetzung wahrscheinlich von Anfang an ausreichende Mengen an freien Oxidationsinhibitoren zur Verfügung stehen. Die gute Wirksamkeit der verkappten Oxidationsinhibitoren kann aber auch eine stoffspezifische Eigenschaft sein.

Beim erfindungsgemäßen Verfahren kann den radikalisch vernetzbaren Polymeren vorteilhaft wenigstens ein Kondensationskatalysator für Silanolgruppen zugesetzt werden. Diese Katalysatoren beschleunigen die Kondensation der bei der Hydrolyse der Si—O-Bindungen freiwerdenden Silanolgruppen zu Siloxanbrücken.

Als weiterer Vorteil kommt beim erfindungsgemäßen Verfahren hinzu, daß sich die verkappten Oxidationsinhibitoren aufgrund ihrer guten Löslichkeit in unpolaren Kohlenwasserstoffen in den Polymeren leicht homogen verteilen und während der Vernetzung in dieser Verteilung verankern lassen sollten, was sich wahrscheinlich auf ihre Wirksamkeit nach der Rückbildung vorteilhaft auswirkt (vgl. dazu die gleichzeitig eingereichte europäische Patentanmeldung »Verfahren zur Stabilisierung von Polymeren«, EP-A1-0 005 772).

Beim erfindungsgemäßen Verfahren werden nämlich überraschenderweise höhere Vernetzungsgrade erreicht als dies bei der Verwendung üblicher unverkappter Oxidationsinhibitoren der Fall ist. Da sich die Vernetzungsausbeuten durch den Einfluß der erfindungsgemäß zum Einsatz gelangenden

Verbindungen mit Alkenylgruppen am Siliciumatom sogar gegenüber dem — in der vorstehend bezeichneten, gleichzeitig eingereichten europäischen Patentanmeldung beschriebenen — Verfahren der Verwendung alkenylgruppenfreier Verkappungskomponenten steigern lassen, ermöglicht das erfindungsgemäße Verfahren zum Erreichen desselben Vernetzungsgrades eine noch stärkere Reduzierung der Konzentration an Vernetzungsinitiatoren bzw. bei Vernetzung durch Strahlung der Strahlendosis. Dadurch wird beispielsweise die Fertigung strahlenvernetzter Mittelspannungskabel- und Leitungsisolierungen wesentlich erleichtert. Bei der peroxidisch initiierten Vernetzung kann die Peroxidkonzentration verringert bzw. die Vernetzungszeit reduziert und bei der Silanvernetzung, d. h. bei der mit Hilfe von Alkenyltrialkoxysilanen durchgeführten chemischen Vernetzung, die zur Pfropfung benötigte Peroxidkonzentration gesenkt werden, wodurch das Ausmaß der sehr störenden Anvernetzung während des Pfropfungsvorgangs vermindert werden kann.

Zur Erklärung der vernetzungsverstärkenden Wirkung der in verkappter Form zum Einsatz gelangenden Oxidationsinhibitoren kann man annehmen, daß die Oxidationsinhibitoren über die olefinischen Doppelbindungen der Si-Alkenylgruppen der Verkappungskomponenten bei der Vernetzung in das entstehende Polymernetzwerk eingebaut werden, so daß sie bis zu ihrer hydrolytischen Rückbildung im Polymernetzwerk verankert sind. Mit der Freisetzung der Oxidationsinhibitoren entstehen netzwerkgebundene Silanole, die miteinander, gegebenenfalls unter Einfluß geeigneter Katalysatoren, wie Dibutylzinndilaurat, unter Ausbildung von Siloxanbrücken reagieren, wodurch der Vernetzungsgrad des Polymermaterials weiter gesteigert wird.

Als weiterer Vorteil der erfindungsgemäß in verkapptem Zustand eingesetzten Oxidationsinhibitoren ist zu werten, daß eine dabei auftretende Verfärbung des Polymermaterials geringer ist als bei Verwendung der unverkappten Produkte.

Die Verkappung der phenolischen Oxidationsinhibitoren wird durch Umsetzung mit Silanderivaten der Formel $M_{4-x}Si(R^1)_x$ durchgeführt, wobei M eine zur O-Silylierung befähigte Gruppe ist, beispielsweise Halogen, Alkoxy, Alkenoxy und Silylamino, $x$ den Wert 1 oder 2 annehmen kann und wenigstens ein Rest $R^1$ am Siliciumatom Alkenyl darstellt. Bevorzugt wird vor allem die Silylierung mit Silanderivaten, bei denen M Chlor ist; derartige Verbindungen sind beispielsweise Dichlormethylvinylsilan und 1,3-Dichlor-1,3-divinyl-dimethyldisiloxan. Die Silylierung mit Organoschlorsilanen wird in gängigen inerten Lösungsmitteln, wie Toluol und Diäthyläther, durchgeführt, gegebenenfalls unter Zusatz eines wenigstens stöchiometrischen Anteils eines tertiären Amins.

Ein Beispiel für einen erfindungsgemäß verkappten Oxidationsinhibitor ist der über Methylvinylsilylengruppen oligomerisierte Bis(4-hydroxy-2-methyl-5-t-butyl)diphenylthioäther:

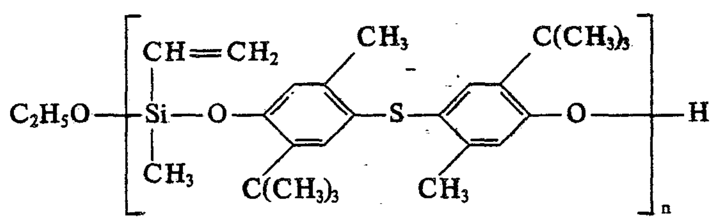

Die auf die beschriebene Weise hergestellten silylierten Phenole sind hydrolyseempfindlich und müssen deshalb gegen Feuchtigkeit geschützt werden. Dies erfordert jedoch keine besonderen Maßnahmen.

Nach dem erfindungsgemäßen Verfahren können radikalisch vernetzte Polymere, beispielsweise vernetzte Polyolefine, gegen Schädigungen durch Oxidation geschützt werden. Im einzelnen lassen sich nach dem erfindungsgemäßen Verfahren insbesondere vernetzte Homo- und Copolymerisate von Äthylen und $\alpha$-Olefinen, wie Propen und Buten-1, sowie Copolymerisate von Äthylen und $\alpha$-Olefinen, wie Vinylacetat und Äthylacrylat, und vernetzte Terpolymerisate aus Äthylen, Propen und einem Dien, wie Hexadien, Dicyclopentadien oder Äthylidennorbornen, Polymermischungen auf der Basis von Polyolefinen oder mit Polyolefinen als wesentlichem Bestandteil und Blockcopolymere auf der Basis von Polyolefinen oder mit Polyolefinen als wesentlichem Bestandteil stabilisieren.

Die erfindungsgemäß verkappten Oxidationsinhibitoren zeigen eine gute Verträglichkeit mit den vernetzten Polymeren und verfärben diese — wenn überhaupt — nur geringfügig. Sie werden in die Polymeren vor der Vernetzung in Konzentrationen von 0,01 bis 10,0 Masse-%, vorzugsweise 0,1 bis 5,0 Masse-%, nach den üblichen Methoden, beispielsweise in einem Innenmischer, eingearbeitet. Die dabei erhaltenen Polymermischungen werden nach der Formgebung beispielsweise als Folien, Formteile, Schläuche, Rohre, Spritzgußartikel und beschichtete Drähte, Kabel und Leitungen radikalisch, beispielsweise durch organische Peroxide oder energiereiche Strahlen, vernetzt. Für die peroxidische Vernetzung kommen die üblichen, zur Vernetzung von Olefinpolymeren verwendeten organischen Peroxide in Frage, bevorzugt Dicumylperoxid und di-t-butyl-substituierte Peroxide, wie Di-t-butylperoxid, 1,3-Bis(t-butyl-peroxyisopropyl)benzol und 2,5-Di-t-butylperoxy-2,5-dimethylhexan. Die Vernetzung mit energiereichen Strahlen kann vorzugsweise durch $\beta$-Strahlen, aber auch durch $\gamma$- oder Röntgenstrahlen erfolgen. Strahlungsquellen sind hierbei Röntgenanlagen oder radioaktive Isotope, bevorzugt Elektronenbeschleuniger. Als Kondensationskatalysatoren für Silanolgruppen sind

Amine oder carbonsaure Salze vieler Metalle, wie Pb, Zn, Zr, Sb, Fe, Cd, Sn, Ba, Ca und Mn, insbesondere Naphthenate, Oktoate, Hexoate, Laurate und Acetate, geeignet. Vornehmlich haben sich Zinn)(II)-oktoat und Dibutylzinndilaurat bewährt.

Die mittels des erfindungsgemäßen Verfahrens stabilisierten vernetzten Polymeren können selbstverständlich auch noch andere Zusatzstoffe enthalten, die in Polymerformulierungen verwendet werden, wie Metalldesaktivatoren, Peroxidzersetzer, UV-Absorbentien, vernetzungsbeschleunigende Zusätze, Weichmacher, antistatische Mittel, Flammschutzmittel, Pigmente, Ruß und Glasfasern, aber auch mineralische Füllstoffe, wie Kaolin, Kreide und Talk.

Anhand von Ausführungsbeispielen soll die Erfindung noch näher erläutert werden.

Die gegen thermooxidativen Abbau stabilisierende Wirkung der erfindungsgemäßen Oxidationsinhibitoren wird in den Beispielen durch volumetrische Messung der Sauerstoffaufnahme von Polymerfolien in Abhängigkeit von der Zeit bei einer Temperatur von 135° C und einem Druck von 1 bar nachgewiesen. Sie entspricht der Sauerstoffabnahme in einem geschlossenen, mit reinem Sauerstoff gefüllten System, das die Probe des peroxid- bzw. strahlenvernetzten Polymeren in Form einer 100-µm-Preßfolie enthält. Das System enthält außerdem noch Bariumoxid als Adsorbens für die sauren gasförmigen Reaktionsprodukte und für Wasser. Als vergleichendes Kriterium für die stabilisierende Wirkung der erfindungsgemäßen Oxidationsinhibitoren wird in den folgenden Ausführungsbeispielen die Induktionsperiode gewählt. Dies ist der Zeitraum, der bis zur einsetzenden Autoxidation, d. h. bis zur spontan einsetzenden stark ansteigenden Sauerstoffaufnahme des Prüfkörpers verstreicht. Der Beginn der Autoxidation ist aus der graphischen Darstellung der Sauerstoffaufnahme (in ml/g Folie) über der Zeit (in Stunden) durch Rückverlängerung des linearen Teils des die Autoxidation anzeigenden, steil aufsteigenden Kurvenastes bis zum Schnittpunkt mit der Zeitachse sehr einfach zu ermitteln.

Die prozentuale Vernetzung der vernetzten Polymermischungen wird an 1-mm-Platten durch Ermittlung des unlöslichen Gel-Anteils nach 12stündiger Granulatextraktion (Granulat aus Würfeln der Kantenlänge 1 mm) in siedendem Xylol bestimmt (Gelwert).

## Beispiel 1

Beispiel 1 zeigt, daß beim Einsatz eines erfindungsgemäß verkappten oligomeren Oxidationsinhibitors (4) zur Stabilisierung von vernetztem Polyäthylen ein besseres Vernetzungsergebnis erzielt wird als mit einem unverkappten Oxidationsinhibitor (1) oder mit einem vergleichbar verkappten monomeren Oxidationsinhibitor (2) oder mit einem vergleichbar verkappten oligomeren Oxidationsinhibitor (3), dessen Verkappungskomponente keine Alkenylgruppen enthält.

### a) Strahlenvernetzung

Hochdruckpolyäthylen LDPE (d=0,918, $MFI_{190/2}=0{,}2$) wird im Laborkneter bei 135°C plastifiziert. Nach Zugabe des Oxidationsinhibitors unter Stickstoffbegasung wird 3 Minuten homogenisiert und die Mischung dann granuliert. Aus dem Granulat werden bei 180°C 1-mm-Platten gepreßt, die unter einem 750-kV-Kaskadenelektronenbeschleuniger mit einer Dosis von 200 kGy vernetzt werden. Die Mischungsverhältnisse und die Vernetzungsergebnisse (Gelwert) sind in Tabelle 1 zusammengefaßt.

Tabelle 1

| | LDPE (g) | Oxidationsinhibitor (g) | Gelwert (% Gelfraktion) |
|---|---|---|---|
| Bis(4-hydroxy-2-methyl-5-t-butyl)diphenylthioäther /1/ | 99,60 | 0,40 | 55 |
| Bis(4-dimethylvinylsilyloxy-2-methyl-5-t-butyl)diphenylthioäther /2/ | 99,36 | 0,64 | 66 |
| über Dimethylsilylengruppen oligomerisierter Bis(4-hydroxy-2-methyl-5-t-butyl)diphenylthioäther /3/ | 99,53 | 0,47 | 65 |
| über Methylvinylsilylengruppen oligomerisierter Bis(4-hydroxy-2-methyl-5-t-butyl)-diphenylthioäther /4/ | 99,52 | 0,48 | 69 |

b) Peroxidvernetzung

Hochdruckpolyäthylen LDPE (d = 0,918, $MFI_{190/2}$ = 0,2) wird im Laborkneter bei 135° C plastifiziert. Nach Zugabe des Oxidationsinhibitors wird 2 Minuten homogenisiert, anschließend wird der Vernetzungsinitiator 1,3-Bis(t-butyl-peroxyisopropyl)benzol zugegeben und weitere 2 Minuten homogenisiert. Die Mischung wird dann granuliert, und aus dem Granulat werden 1-mm-Platten und 100-µm-Folien gepreßt und bei 180° C während 15 Minuten vernetzt. Die Mischungszusammensetzung und die Vernetzungsergebnisse sind in Tabelle 2 aufgeführt.

Tabelle 2

| | LDPE (g) | Vernetzungs-initiator (g) | Oxidations-inhibitor (g) | Gelwert (% Gel-fraktion) |
|---|---|---|---|---|
| Bis(4-hydroxy-2-methyl-5-t-butyl)-diphenylthioäther /1/ | 98,40 | 1,20 | 0,40 | 77,5 |
| | 98,90 | 0,70 | 0,40 | 60,5 |
| | 99,10 | 0,50 | 0,40 | 49,0 |
| Bis(4-dimethylvinylsilyloxy-2-methyl-5-t-butyl)diphenylthioäther /2/ | 98,16 | 1,20 | 0,64 | 89,0 |
| | 98,86 | 0,50 | 0,64 | 79,0 |
| über Dimethylsilylengruppen oligomerisierter Bis(4-hydroxy-2-methyl-5-t-butyl)diphenylthioäther /3/ | 98,33 | 1,20 | 0,47 | 84,0 |
| | 99,03 | 0,50 | 0,47 | 63,0 |
| über Methylvinylsilylengruppen oligomerisierter Bis(4-hydroxy-2-methyl-5-t-butyl)diphenylthioäther /4/ | 98,32 | 1,20 | 0,48 | 88,0 |
| | 98,82 | 0,70 | 0,48 | 82,0 |
| | 99,02 | 0,50 | 0,48 | 76,0 |

## Beispiel 2

Beispiel 2 zeigt die bei der Alterung einer mit einem erfindungsgemäßen Oxidationsinhibitor (3) stabilisierten Polyäthylen-Probe erhaltenen Ergebnisse. Es wird mit den Ergebnissen verglichen, die mit dem entsprechenden unverkappten Oxidationsinhibitor (1) bzw. mit einem vergleichbar verkappten monomeren Oxidationsinhibitor (2) erhalten werden.

a) Peroxidvernetzte Proben

Hochdruckpolyäthylen LDPE (d = 0,918, $MFI_{190/2}$ = 0,2) wird im Laborkneter bei 135° C plastifiziert. Nach Zugabe des Oxidationsinhibitors wird 2 Minuten homogenisiert, anschließend der Vernetzungsinitiator 1,3-Bis(t-butylperoxyisopropyl)benzol zugegeben und weitere 2 Minuten homogenisiert. Die Mischung wird dann granuliert, und aus dem Granulat werden 100-µm-Folien gepreßt, die in der Presse bei 180° C während 15 Minuten vernetzt werden.

Die Proben werden in reinem Sauerstoff bei 135° C gealtert, und dabei wird die Induktionsperiode (Beginn der autoxidativen Zersetzung) bestimmt. In Tabelle 3 sind die Mischungsverhältnisse und die Alterungsergebnisse zusammengefaßt.

Tabelle 3

| | LDPE (g) | Vernetzungs-initiator (g) | Oxidations-inhibitor (g) | Induktions-periode (h) |
|---|---|---|---|---|
| Bis(4-hydroxy-2-methyl-5-t-butyl)-diphenylthioäther /1/ | 98,40 | 1,20 | 0,40 | 650 |
| Bis(4-dimethylvinylsilyloxy-2-methyl-5-t-butyl)diphenylthio-äther /2/ | 98,21 | 1,20 | 0,59 | 620 |
| über Methylvinylsilylengruppen oligo-merisierter Bis(4-hydroxy-2-methyl-5-t-butyl)diphenylthioäther /3/ | 98,32 | 1,20 | 0,48 | 650 |

b) Strahlenvernetzte Proben

Die Mischungsherstellung erfolgt wie unter a) beschrieben, allerdings ohne Peroxidzusatz. Die bei 180°C gepreßten 100-µm-Folien werden durch energiereiche Elektronen mit einer Dosis von 200 kGy vernetzt. In reiner Sauerstoffatmosphäre werden dann bei 135°C Alterungstemperatur die Induktionsperioden mittels Folienproben bestimmt. Sie sind zusammen mit den Mischungsverhältnissen in Tabelle 4 wiedergegeben.

Tabelle 4

| | LDPE (g) | Oxidations-inhibitor (g) | Induktions-periode (h) |
|---|---|---|---|
| Bis(4-hydroxy-2-methyl-5-t-butyl)diphenyl-thioäther /1/ | 99,60<br>99,40 | 0,40<br>0,60 | 450<br>720 |
| Bis(4-dimethylvinylsilyloxy-2-methyl-5-t-butyl)diphenylthioäther /2/ | 99,41 | 0,59 | 420 |
| über Methylvinylsilylengruppen oligomerisierter Bis(4-hydroxy-2-methyl-5-t-butyl)-diphenylthioäther /3/ | 99,52<br>99,28 | 0,48<br>0,72 | 470<br>800 |

Beispiel 3

Beispiel 3 zeigt den Einfluß einer 16stündigen Lagerung erfindungsgemäß stabilisierter, peroxidisch vernetzter Polyäthylenproben in siedendem Wasser auf den Vernetzungsgrad. Weder in An- noch in Abwesenheit des Kondensationskatalysators Dibutylzinndilaurat wird eine Abnahme der Gelwerte beobachtet. Dieser Befund sützt die Annahme, daß die durch Hydrolyse der Si—O-Bindungen entstehenden, netzwerkgebundenen Silanole miteinander unter Ausbildung von Siloxanbrücken reagieren.

Hochdruckpolyäthylen LDPE (d=0,918, $MFI_{190/2}$=0,2) wird im Laborkneter bei 135°C plastifiziert. Nach Zugabe des Oxidationsinhibitors bzw. des Gemisches aus Oxidationsinhibitor und Kondensationskatalysator wird 2 Minuten homogenisiert, anschließend wird der Vernetzungsinitiator 1,3-Bis(t-butyl-peroxyisopropyl)benzol zugegeben und weitere 2 Minuten homogenisiert. Die Mischung wird dann granuliert, und aus dem Granulat werden 1-mm-Platten und 100-µm-Folien gepreßt und bei 180°C während 15 Minuten vernetzt. Die Mischungszusammensetzung und die Vernetzungsergebnisse, d. h. die Gelwerte unmittelbar nach der Vernetzung, sowie die Gelwerte nach 16stündiger Lagerung in siedendem Wasser sind in Tabelle 5 zusammengefaßt.

Tabelle 5

| | LDPE (g) | Vernetzungsinitiator (g) | Kondensationskatalysator (g) | Oxidationsinhibitor (g) | Gelwert (% Gelfraktion) | Gelwert nach 16 h Wasserlagerung (% Gelfraktion) |
|---|---|---|---|---|---|---|
| über Methylvinylsilylengruppen oligomerisierter Bis(4-hydroxy-2-methyl-5-t-butyl)-diphenylthioäther | 99,02 | 0,50 | – | 0,48 | 76,0 | 75,5 |
| | 98,72 | 0,50 | 0,30 | 0,48 | 76,0 | 75,5 |
| | 98,82 | 0,70 | – | 0,48 | 82,5 | 82,0 |
| | 98,52 | 0,70 | 0,30 | 0,48 | 81,5 | 81,5 |

**Patentansprüche**

1. Verfahren zur Vernetzung von radikalisch vernetzbaren Polymeren und zur Stabilisierung gegen oxidativen und/oder thermischen Abbau, wobei die Vernetzung in Gegenwart phenolischer Oxidationsinhibitoren mit teilweise durch Silyl- bzw. Silylengruppen substituierten inhibierungsaktiven Hydroxylgruppen durchgeführt wird, dadurch gekennzeichnet, daß oligomere Verbindungen folgender Struktur als Oxidationsinhibitoren verwendet werden:

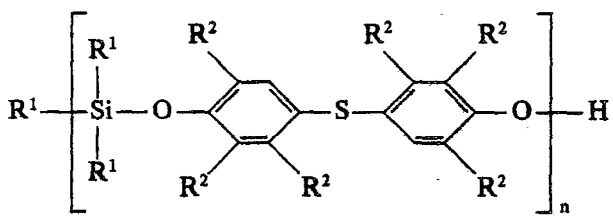

wobei n eine Zahl bis 20 ist,
mindestens ein Rest $R^1$ an jedem Si-Atom Alkenyl mit 2 bis 3 C-Atomen bedeutet und die weiteren Reste $R^1$ gleich oder verschieden sind und folgende Bedeutung haben:
Alkyl mit 1 bis 3 C-Atomen, Phenyl, Cycloalkyl, Alkyloxy mit 1 bis 3 C-Atomen, Methoxyäthoxy, Äthoxyäthoxy, Aryloxy, Aralkyloxy mit 7 bis 11 C-Atomen und Cycloalkyloxy,
und die Reste $R^2$ gleich oder verschieden sind und Wasserstoff oder n- und iso-Alkyl mit 1 bis 5 C-Atomen bedeuten oder die beiden ortho-ständigen Substituenten $R^2$ zusammen Benzo sein können.

2. Verfahren nach Anspruch 1, dadurch gekennzeichnet, daß den radikalisch vernetzbaren Polymeren wenigstens ein Kondensationskatalysator für Silanolgruppen zugesetzt wird.

3. Verfahren nach Anspruch 1 oder 2, dadurch gekennzeichnet, daß 0,01 bis 10,0 Masse-%, vorzugsweise 0,1 bis 5,0 Masse-%, bezogen auf das Polymere, an Oxidationsinhibitor verwendet werden.

4. Verfahren nach einem der Ansprüche 1 bis 3, dadurch gekennzeichnet, daß als radikalisch vernetzbare Polymere Homo- oder Copolymerisate von Äthylen und $\alpha$-Olefinen, wie Propen und Buten-1, Copolymerisate von Äthylen mit Vinylacetat oder Äthylacrylat, Terpolymerisate, die durch Polymerisation von Äthylen mit Propen in Gegenwart nichtkonjugierter Diene, insbesondere Dicyclopentadien, Hexadien und Äthylidennorbornen, erhalten wurden, Gemische derartiger Polymerer auf der Basis von Polyolefinen oder mit Polyolefinen als wesentlichem Bestandteil oder Blockcopolymere auf der Basis von Polyolefinen oder mit Polyolefinen als wesentlichem Bestandteil verwendet werden.

**Claims**

1. A process for cross-linking polymers which can be cross-linked by means of free radicals, and for stabilization against oxidative and/or thermal decomposition, wherein the cross-linking is carried out in the presence of phenolic oxidation inhibitors having inhibition-active of phenolic oxidation inhibitors having inhibition-active hydroxyl groups which are partially substituted by silyl groups or silylene groups, characterised in that, as oxidation inhibitors, there are used oligomeric compounds of the following structure:

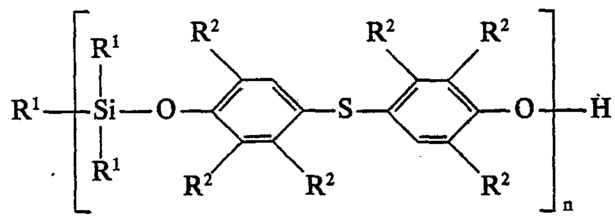

where n is a number up to 20; at least one residue $R^1$ at each Si-atom is an alkenyl group with 2 or 3 C-atoms, and the remaining residues $R^1$ may be the same or different and signify:
alkyl having 1 to 3 C-atoms, phenyl, cycloalkyl, alkyloxy having 3 C-atoms, methoxyethoxy, ethoxyethoxy, aryloxy, aralkyloxy having 7 to 11 C-atoms and cycloalkyloxy;
and the residues $R^2$ may be the same or different and signify hydrogen, or n- and iso-alkyl having 1 to 5 C-atoms, or the two substituents $R^2$ in the ortho position together may be benzo.

2. A process according to Claim 1, characterised in that at least one condensation catalyst for silanol groups is added to the free radical-cross-linkable polymers.

3. A process according to Claim 1 or Claim 2, characterised in that 0.01 to 10.0% by weight, preferably 0.1 to 5.0% by weight, of the oxidation inhibitor is used, with reference to the polymer.

4. A process according to one of Claims 1 to 3, characterised in that as free radical-cross-linkable, polymers, there may be used, homo- or copolymers of ethylene and α-olefines, such as propene and butene-1, copolymers of ethylene with vinyl acetate or ethyl acrylate, terpolymers obtained by the polymerization of ethylene with propene in the presence of non-conjugated dienes, in particular dicyclopentadiene, hexadiene, and ethylidenenorbornene, mixture of such polymers having a polyolefine bases, or with polyolefines as an essential component, or block copolymers having a polyolefines basis, or with polyolefines as an essential component.

**Revendications**

1. Procédé de réticulation de polymères réticulables par voie radicalaire et de stabilisation vis-à-vis de la dégradation par voie oxydante et/ou par voie thermique, la réticulation étant effectuée en la présence d'inhibiteurs d'oxydation phénoliques ayant des groupes hydroxy, actifs du point de vue de l'inhibition, substitués partiellement par des groupes silyles et sylilènes, caractérisé en ce qu'il consiste à utiliser, comme inhibiteurs d'oxydation, des composés oligomères ayant la structure suivante:

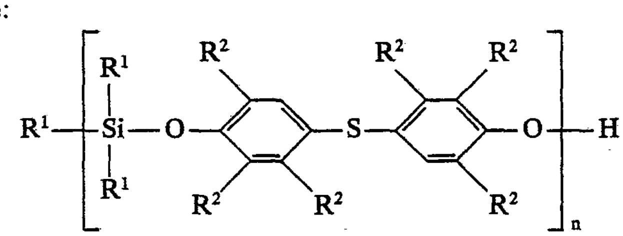

dans laquelle n est un nombre allant jusqu'à 20,
au moins un radical $R^1$ sur chaque atome de Si étant un alcényle ayant de 2 à 3 atomes de carbone et les autres radicaux $R^1$ sont identiques ou différents et ont la signification suivante:
alcoyle ayant de 1 à 3 atomes de carbone, phényle, cycloalcoyle, alcoyloxy ayant de 1 à 3 atomes de carbone, méthoxyéthoxy, éthoxyéthoxy, aryloxy, aralcoyloxy ayant de 7 à 11 atomes de carbone et cycloalcoyloly,
et les radicaux $R^2$ qui sont identiques ou différents représentent de l'hydrogène ou un alcoyle normal ou un isoalcoyle ayant de 1 à 5 atomes de carbone, ou les deux substituants $R^2$ en ortho peuvent être ensemble un benzo.

2. Procédé suivant la revendication 1, caractérisé en ce qu'il consiste à ajouter aux polymères réticulables par voie radicalaire au moins un catalyseur de condensation pour des groupes silanol.

3. Procédé suivant la revendication 1 ou 2, caractérisé en ce qu'il consiste à utiliser de 0,01 à 10,0% en masse et, de préférence, de 0,1 à 5,0% en masse d'inhibiteur d'oxydation par rapport au polymère.

4. Procédé suivant l'une des revendications 1 à 3, caractérisé en ce qu'il consiste à utiliser, comme polymères réticulables par voie radicalaire, des homopolymères ou des copolymères d'éthylène et d'α-oléfines, comme le propène et le butène-1, des copolymères d'éthylène avec de l'acétate de vinyle ou de l'acrylate d'éthyle, des terpolymères, qui ont été obtenus par polymérisation d'éthylène avec du propène en la présence de diènes non conjugués, notamment de dicyclopentadiène, d'hexadiène et d'éthylidène-norbornène, des mélanges de polymères de ce type à base de polyoléfine, ou ayant des polyoléfines comme constituants essentiel, ou des copolymères bloque à base de polyoléfine ou ayant des polyoléfines comme constituants essentiel.